# EUROPEAN PATENT SPECIFICATION

(11) **EP 1 623 892 B1**
(45) Date of publication and mention of the grant of the patent: **06.02.2008**
(21) Application number: 05076768.0
(22) Date of filing: 29.07.2005
(51) Int. Cl.: B60R 22/10, B60N 2/28

(54) **Child vehicle seat**
Fahrzeugkindersitz
Siège enfant pour véhicule

(30) Priority: 02.08.2004 NL 1026767
(43) Date of publication of application: 08.02.2006
(73) Proprietor: Maxi Miliaan B.V., 5704 RD Helmond (NL)
(72) Inventor: Fransen, Martinus Theodorus, 5663 EN Geldrop (NL); Van Driel, Roelof, 5611 PX Eindhoven (NL)
(74) Representative: Veldman-Dijkers, Cornelia G. C.

(56) References cited:
- US-A- 4 660 889
- US-A- 4 679 852
- US-A- 5 031 962
- US-A- 5 061 012
- US-A- 5 286 090

## Description

The invention relates to an child vehicle seat comprising a back support, a seat portion, a crotch member extending through the seat portion, as well as belts that can be detachably connected to the crotch member for securing an child in the child seat, which belts extend through the back support and which are connected to at least one tensioning belt on a side remote from the seat portion, by means of which the belts can be tensioned in a tensioning direction, which tensioning belt extends under the seat portion towards a locking mechanism, which, in a locking position thereof, locks the tensioning belt against movement at least in a direction opposite the tensioning direction, whilst the locking mechanism can be moved to a releasing position by means of the crotch member, in which position the tensioning belt is movable in the opposite direction of the tensioning direction.

With such a vehicle seat, which is known from US patent US-A-5,779,319 and US-B-6,260,925 disclosing the technical features of the preamble of the independent claim, the locking mechanism comprises an automatic belt retractor, in which the tensioning belt is attached with an end remote from the belts to a spring-biased spool. The tensioning belt is withdrawn into the retractor under the influence of the spring-biased spool until the belts and the tensioning belt are sufficiently tensioned.

When the belts are connected to the crotch member, the belts are automatically tensioned, therefore. The degree of tension is mainly determined by the spring that is present within the belt retractor.

When the belts are disconnected from the crotch member, a force will be exerted on the belts in the tensioning direction, which force attempts to move the belts in the direction of the retracting mechanism until further movement is blocked.

Movement of the belts in a direction opposite the tensioning direction is only possible when the locking mechanism is released. With the child vehicle seat according to said US patent this is done by pivoting the crotch member in a direction away from the back support, which movement of the crotch member causes a pawl connected to the locking mechanism to move, thus placing the locking mechanism in a releasing position. In said releasing position, the tensioning belt is movable against spring force in a direction opposite the tensioning direction, so that the length of the belts between the back support and the crotch member can be increased.

A drawback of the child vehicle seat according to the aforesaid US patent is that the belts will automatically be moved in the direction of the back support under the influence of the retractor mechanism when disconnected from the crotch member. A relatively large force must be exerted on the belts to overcome the spring force being exerted by the retractor mechanism upon increasing the length of the belts between the back support and the crotch member. Since the spring force being exerted by the retractor mechanism is determined by the spring that is present in the retractor mechanism, it is not possible to influence the tension with which the belts abut against the child. This is considered to be a drawback, since it is not possible to take the wishes of the child or of the person who places the child into the child vehicle seat into account when tensioning the belts.

The object of the invention is to provide an child vehicle seat in which tensioning, locking, releasing and/or moving the belt is readily possible.

This object is accomplished with the child vehicle seat according to the invention in that the locking mechanism comprises a cam as well as a guide surface disposed thereunder, which cam can be moved from the locking position to the releasing position by means of the crotch member, with a passage for the tensioning belt being disposed between the camera and the guide surface disposed thereunder, which tensioning belt extends beyond the crotch member.

In the locking position, the tensioning belt is locked against movement in a direction opposite the tensioning direction between the cam and the guide surface disposed thereunder. A tensioning belt is moved to a position clear of the passage between the cam and the guide surface by pivoting or translating the cam to the releasing position by means of the crotch member, as a result of which the tensioning belt can move freely both in the tensioning direction and in a direction opposite the tensioning direction. Since the cam is positioned above the guide surface, the cam can readily be operated by means of the crotch member.

When the child is placed into the child vehicle seat, the belts are connected to the crotch member, with the crotch member being in a position in which the crotch member does not prevent movement of the cam to the locking position. Once the belts are connected to the crotch member, a user can take hold of the tensioning belt extending through the passage and tension it, thereby moving the belt through the passage and, as a result, tensioning the belts that are connected to the tensioning belt. The force required for doing so is minimal.

After that it is not possible to move the tensioning belt in a direction opposite the tensioning direction, because this will cause the cam to pivot or translate in the direction of the guide surface, as a result of which the size of the passage is reduced and the tensioning belt is clamped down between the cam and the guide surface.

To remove the child from the child seat, the belts are disconnected from the crotch member, after which the cam is moved from the locking position to the releasing position by operating the crotch member, whereupon the tensioning belt can move freely through the enlarged passage. The degree to which the belts are tensioned is determined by the person who tightens the tensioning belt.

It is noted that from US-A-5,061,012 there is also known a child's seat provided with a retractor mechanism that can be operated by means of a crotch member. The tensioning belt that is used therein only extends as far as the retractor mechanism, so that manual tensioning of the belt is not possible. In addition, the cam is positioned below the guide surface, so that a relatively complex transmission mechanism is required for operating the cam by means of the crotch member.

One embodiment of the child vehicle seat according to the invention is characterized in that the cam can be pivoted against spring force about a pivot pin from the locking position to the releasing position.

Thus, the cam will preferably be in the locking position. The cam is moved from the locking position to the releasing position by pivoting the cam about the pivot pin by means of the crotch member.

Another embodiment of the child vehicle seat according to the invention is characterized in that the crotch member pivots about a hinge pin, the crotch member being provided with a connecting mechanism on one side for being connected to the belts and, on a side of the hinge pin remote from the connecting mechanism, with a lip that mates with the cam, by means of which the cam can be moved to the releasing position.

Pivoting of the cam from the locking position to the releasing position is relatively easy when using a crotch member configured in this manner. Moreover, it is logical to a user to operate the crotch member in this manner, because the crotch member is moved away from the child when the child is being taken out of the child seat, so that the crotch member will not be in the way when the child is taken out of the child seat. To a user, pivoting the crotch member in a direction towards the back support so as to interlock it with the belts is a logical operation as well, because the crotch member is moved towards the belts for doing so.

Yet another embodiment of the child vehicle seat according to the invention is characterized in that the crotch member comprises a spring element, under the influence of the spring force of which spring element the crotch member, when disconnected from the belts, can pivot to a position remote from the back support, in which position the cam is in the releasing position.

In this way a crotch member that is disconnected from the belts can automatically pivot to a position remote from the back support under the influence of spring force, as a result of which the cam is automatically moved to the releasing position, therefore. In this position the crotch member will not be in the way when the child is being taken out of the seat, whilst in addition the belts can easily be moved away from the child and the length of the belts between the back support and the crotch member can be freely extended.

Yet another embodiment of the child vehicle seat according to the invention is characterized in that the tensioning belt extends through the locking mechanism beyond a side of the seat portion remote from the back support.

In this way a user can easily take hold of the tensioning belt in front of the seat portion and tension it.

Yet another embodiment of the child vehicle seat according to the invention is characterized in that the cam is provided with teeth extending towards the guide surface.

The teeth ensure that the tensioning belt is firmly locked in position against the guide surface.

The invention will now be explained in more detail with reference to the drawings, in which:
Figure 1 is a perspective view of an child vehicle seat according to the invention, in which the belts are connected to the crotch member;
Figure 2 is a schematic side view of a part of the child vehicle seat of figure 1 in the locking position;
Figure 3 is a perspective view of the child vehicle seat that is shown in figure 1, in which the belts are disconnected from the crotch member;
Figure 4 is a schematic side view of a part of the child vehicle seat of figure 3 in the releasing position.

Like parts are indicated by the same numerals in the figures.

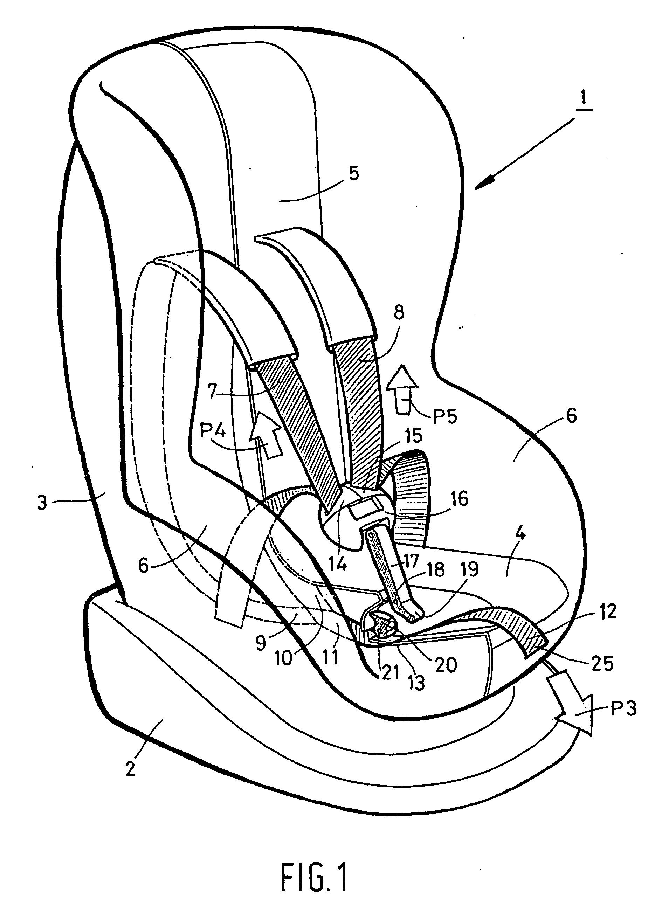

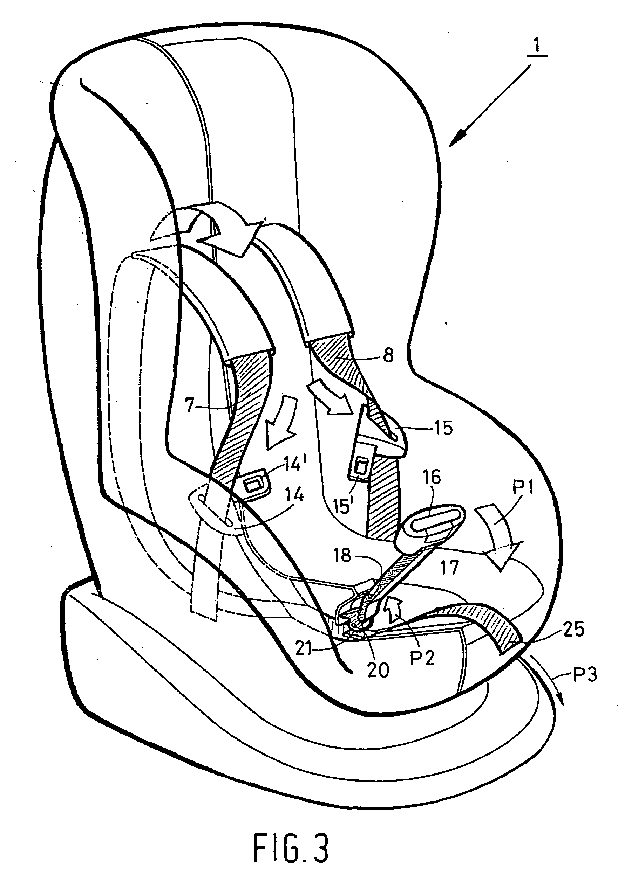

Figure 1 shows an child vehicle seat 1 according to the invention, which comprises a chassis 2 and a seat 3 that is tiltably connected to the chassis 2. The seat 3 comprises a seat portion 4 and a back support 5 connected thereto. The seat portion 4 is bounded by armrests 6 on both longitudinal sides. The child vehicle seat 1 further comprises two belts 7, 8, which are each connected to the seat with one end at the location of a transition between the seat portion 4 and the armrests 6, or which are interconnected under the seat portion, if desired. The ends of the belts 7, 8 remote from the seat portion 4 extend through the back support 5. On the rear side of the back support 5, the belts 7, 8 are connected to an end 11 of a tensioning belt 12 with their ends 9, 10. The tensioning belt 12 extends over a guide surface 13 to a side of the seat portion 4 remote from the back support 5. Belt buckles 14, 15 can slide over the belts 7, 8, which belt buckles 14, 15 are provided with buckle tongues 14' and 15', respectively (figure 3). The child vehicle seat 1 further comprises a crotch member 17, which is pivotally connected to the seat 3 about a hinge pin 18. The crotch member 17 is provided with a buckle lock 16 at one end, with which buckle lock the buckle tongues 14', 15' of the belt buckles 14, 15 can be interlocked. The crotch member 17 is provided with a lip 19 on a side remote from the belt buckle 16.

The child vehicle seat 1 further comprises a cam 20 positioned under the seat portion 4, near the hinge pin 18, which cam pivots about a pivot pin 21. The cam 20 is positioned above the guide surface 13 and is provided with teeth 22 on a side facing towards the guide surface 13. A passage 23 is present between the cam 20 and the guide surface 13, through which passage the tensioning belt 12 extends.

The operation of the child vehicle seat 1 according to the invention is as follows.

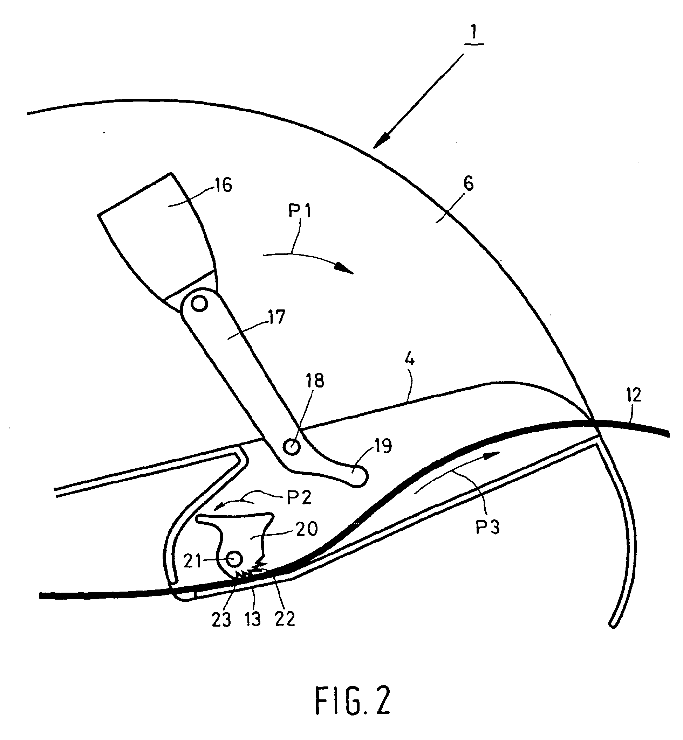

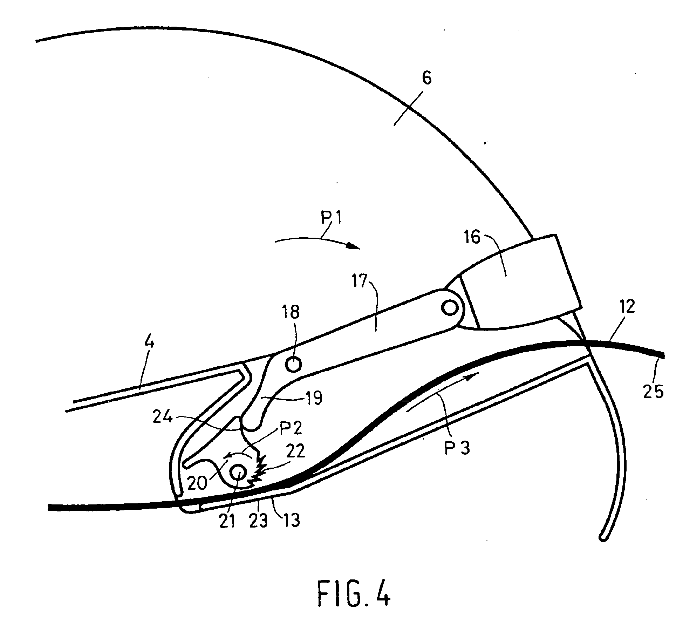

When a child is to be placed into the child seat 1, the buckle tongues of the belt buckles 14, 15 are unlocked from the buckle lock 16 and the crotch member 17 has been pivoted about the hinge pin 18 in the direction indicated by the arrow P1 (figures 3, 4), during which movement the lip 19 has come into contact with a contact surface 24 on the cam 20, causing the cam 20 to pivot in the direction indicated by the arrow P2. The cam 20 is shaped so that pivoting in the direction indicated by the arrow P2 causes the size of the passage 23 to increase, enabling the tensioning belt 12 to move freely through the passage 23 in the tensioning direction indicated by the arrow P3 and in the opposite direction. The belts 7, 8 can now be moved sideways, making it possible to place the child on the seat portion 4 and against the back support 5. The child then passes its arms through the belts 7, 8, and the buckle tongues 14', 15' connected to the belt buckles 14, 15 are inserted into the buckle lock 16 and interlocked therewith (figures 1, 2). The crotch member 17 will be pivoted about the hinge pin 18 in the opposite direction of the arrow P1, from the position that is shown in figure 4 to the position that is shown in figure 2. The lip 19 is moved out of contact with the contact surface 24 on the cam 20, after which the cam 20 is pivoted about the pivot pin 21 in a direction opposite the direction indicated by the arrow P2 under the influence of the force of gravity or under the influence of a spring that mates with the cam 20. This causes the passage 23 to become smaller and the teeth 22 to be moved into engagement with the tensioning belt 12, which tensioning belt 12 is clamped down between the cam 20 and the guide surface 13. To tighten the belts 7, 8 against the child, a user will take hold of the end 25 that is present at the front side of the child seat 1 and move said end 25 in the tensioning direction indicated by the arrow P3. Since the belts 7, 8 are connected to the end 11 of the tensioning belt 12 with their ends 9, 10, movement of the tensioning belt 12 in the direction indicated by the arrow P3 will also cause the belts 7, 8 to move in the direction indicated by the arrows P4, P5, into abutment with the child. The degree of tensioning is determined by the user himself. The cam 20 will pivot in the direction indicated by the arrow P2, against the force of gravity or the spring force, during the movement of the tensioning belt 12 in the direction indicated by the arrow P3, as a result of which the size of the passage will be such that the tensioning belt 12 can move freely through said passage. If it is attempted to move the belts 7, 8 in the opposite direction of the arrows P4, P5, the cam will be pivoted in the opposite direction of the arrow P2 to the locking position, causing the teeth 22 to be pressed more strongly into the tensioning belt 12, so that the belts 7, 8 are prevented from moving in the opposite directions of the arrows P4, P5.

To remove the child from the child vehicle seat 1, the buckle belt 16 is unlocked, after which the buckle tongues 14', 15' that interlock with the belt buckles 14, 15 can be removed from the buckle lock 16 and the belts 7, 8 can be detached from the child (figures 3, 4). The crotch member 17 is now pivoted in the direction indicated by the arrow P1, as a result of which the cam 20 is pivoted in the direction indicated by the arrow P2 in a manner as described above, and the tensioning belt 12, and thus also the belts 7, 8 that are connected thereto, can be moved freely into directions indicated by the arrows P3, P4, P5 and in the opposite directions.

Preferably, the crotch member 17 comprises a spring disposed near the hinge pin 18, under the influence of which the crotch member 17 will preferably take up the position that is shown in figure 4, with the cam 20 in the releasing position. In this way it is ensured that placing the child into the child vehicle seat will be easy, without the crotch member 17 being in the way. Moreover, the cam 20 is in the releasing position in this position of the crotch member 17, so that the belts 7, 8 can readably be moved in the directions indicated by the arrows P4, P5 and in the opposite directions so as to be arranged about the child.

The child vehicle seat can be used with a vehicle, such as a car or a bicycle.

According to another possibility, each belt extending through the back support is connected to a separate tensioning belt. The tensioning belt may form part of the belt in that case.

It is also possible to have the cam undergo a translating movement instead of a pivoting movement between the releasing position and the locking position, and vice versa.

The cam may have a random shape, which shape causes the belt to be locked against movement upon movement of the cam from the releasing position to the locking position and which, upon movement of the cam from the locking position to the releasing position, makes it possible for the belt to be moved freely again.

## Claims

1. A child vehicle seat (1) comprising a back support (5), a seat portion (4), a crotch member (17) extending through the seat portion (4), as well as belts (7, 8) that can be detachably connected to the crotch member (17) for securing an child in the child seat (1), which belts (7, 8) extend through the back support (5) and which are connected to at least one tensioning belt (12) on a side remote from the seat portion (4), by means of which the belts (7, 8) can be tensioned in a tensioning direction, which tensioning belt (12) extends under the seat portion (4) towards a locking mechanism, which, in a locking position thereof, locks the tensioning belt (12) against movement at least in a direction opposite the tensioning direction, whilst the locking mechanism can be moved to a releasing position by means of the crotch member (17), in which position the tensioning belt is movable in the opposite direction of the tensioning direction, **characterized in that** the locking mechanism comprises a cam (20) as well as a guide surface (13) disposed thereunder, which cam (20) can be moved from the locking position to the releasing position by means of the crotch member (17), with a passage for the tensioning belt (12) being disposed between the cam (20) and the guide surface (13) disposed thereunder, which tensioning belt (12) extends beyond the crotch member (17).

2. A child vehicle seat (1) according to claim 1, **characterized in that** the cam (20) can be pivoted against spring force about a pivot pin (21) from the locking position to the releasing position.

3. A child vehicle seat (1) according to claim 1 or 2, **characterized in that** the crotch member (17) hinges about a hinge pin (18), the crotch member (17) being provided with a connecting mechanism (16) on one side for being connected to the belts (7, 8) and, on a side of the hinge pin (18) remote from the connecting mechanism (16), with a lip (19) that mates with the cam (20), by means of which the cam (20) can be moved to the releasing position.

4. A child vehicle seat (1) according to any one of the preceding claims, **characterized in that** the crotch member (17) comprises a spring element, under the influence of the spring force of which spring element the crotch member (17), when disconnected from the belts (7, 8), can pivot to a position remote from the back support (5), in which position the cam (20) is in the releasing position.

5. A child vehicle seat (1) according to any one of the preceding claims, **characterized in that** the tensioning belt (12) extends through the locking mechanism, beyond a side of the seat portion (4) remote form the back support (5).

6. A child vehicle seat according to any one of the preceding claims, **characterized in that** the cam (20) is provided with teeth (22) extending towards the guide surface (13).

## Patentansprüche

1. Kinderautositz (1), umfassend eine Rückenlehne (5), einen Sitzabschnitt (4), ein sich durch den Sitzabschnitt (4) erstreckendes Gabelstück (17), sowie Gurte (7, 8), die mit dem Gabelstück (17) abnehmbar verbunden sind, um ein Kind im Kinderautositz (1) zu sichern, wobei die Gurte (7, 8) sich durch die Rückenlehne (5) erstrecken und an einer vom Sitzabschnitt (4) entfernten Stelle mit mindestens einem Spanngurt (12) verbunden sind, mit Hilfe dessen die Gurte (7, 8) in einer Spannrichtung gespannt werden können, wobei der Spanngurt (12) sich unter dem Sitzabschnitt (4) zu einer Schließvorrichtung hin erstreckt, die in Schließposition den Spanngurt (12) gegen eine Bewegung zumindest entgegen der Spannrichtung arretiert, während die Schließvorrichtung mittels des Gabelstücks (17) in eine Freigabeposition bewegt werden kann, in welcher der Spanngurt entgegen zur Spannrichtung bewegbar ist, **dadurch gekennzeichnet, daß** die Schließvorrichtung einen Nocken (20) und eine darunter angebrachte Führungsfläche (13) umfaßt, wobei der Nocken (20) mittels des Gabelstücks (17) aus der Schließposition in die Freigabeposition bewegt werden kann, mit einem zwischen Nocken (20) und darunter angebrachter Führungsfläche (13) angebrachten Durchgang für den Spanngurt (12), wobei sich der Spanngurt (12) über das Gabelstück (17) hinaus erstreckt.

2. Kinderautositz (1) nach Anspruch 1, **dadurch gekennzeichnet, daß** der Nocken (20) gegen eine Federkraft um einen Drehzapfen (21) aus der Schließposition in die Freigabeposition geschwenkt werden kann.

3. Kinderautositz (1) nach Anspruch 1 oder 2, **dadurch gekennzeichnet, daß** das Gabelstück (17) sich um einen Scharnierstift (18) dreht und daß das Gabelstück (17) auf einer Seite mit einer mit einer Anschlußvorrichtung (16) zum Verbinden mit den Gurten (7, 8) und auf der von der Anschlußvorrichtung entfernten Scharnierstiftseite mit einer Schneide (19) versehen ist, die in den Nocken (20) eingreift und mit der der Nocken (20) in die Freigabeposition bewegt werden kann.

4. Kinderautositz (1) nach einem der vorangehenden Ansprüche, **dadurch gekennzeichnet, daß** das Gabelstück (17) ein Federelement umfaßt, wobei das Gabelstück (17), wenn es von den Gurten (7, 8) getrennt wird, unter dem Einfluß der Federkraft dieses Federelements in eine von der Rückenlehne (5) entfernte Position schwenken kann, in welcher der Nocken (20) in der Freigabeposition ist.

5. Kinderautositz (1) nach einem der vorangehenden Ansprüche, **dadurch gekennzeichnet, daß** der Spanngurt (12) sich durch die Schließvorrichtung über die von der Rückenlehne (5) entfernte Seite des Sitzabschnitts (4) hinaus erstreckt.

6. Kinderautositz (1) nach einem der vorangehenden Ansprüche, **dadurch gekennzeichnet, daß** der Nocken (20) mit Zähnen (22) versehen ist, die sich zur Führungsfläche (13) hin erstrecken.

## Revendications

1. Siège enfant pour véhicule (1) comprenant un support dorsal (5), une partie de siège (4), un élément d'entrejambe (17) s'étendant à travers la partie de siège (4), ainsi que des ceintures (7, 8) qui peuvent être connectées de manière détachable à l'élément d'entrejambe (17) pour attacher un enfant dans le siège enfant (1), lesquelles ceintures (7, 8) s'étendent à travers le support dorsal (5) et qui sont connectés à au moins une ceinture de tension (12) sur un côté éloigné de la partie de siège (4), au moyen de laquelle les ceintures (7, 8) peuvent être mises sous tension dans une direction de mise sous tension, laquelle ceinture de tension (12) s'étend sous la partie de siège (4) vers un mécanisme de blocage, qui, dans un position de blocage de celui-ci, bloque le mouvement de la ceinture de tension (12) dans au moins une direction opposée à la direction de tension, alors que le mécanisme de blocage peut être déplacé dans une position de libération au moyen de l'élément d'entrejambe (17), dans laquelle position la ceinture de tension est mobile dans la direction opposée à la direction de tension, **caractérisé en ce que** le mécanisme de blocage comprend une came (20) ainsi qu'une surface de guidage (13) disposée dessous, laquelle came (20) peut être déplacée de la position de blocage à la position de libération au moyen de l'élément d'entrejambe (17), un passage pour la ceinture de tension (12) étant disposé entre la came (20) et la surface de guidage (13) disposée dessous, laquelle ceinture de tension (12) s'étend au-delà de l'élément d'entrejambe (17).

2. Siège enfant pour véhicule (1) selon la revendication 1, **caractérisé en ce que** la came (20) peut être pivotée contre une force élastique autour d'un axe de pivot (21) de la position de blocage vers la position de libération.

3. Siège enfant pour véhicule (1) selon la revendication 1 ou 2, **caractérisé en ce que** l'élément d'entrejambe (17) est articulé autour d'un axe d'articulation (18), l'élément d'entrejambe (17) étant pourvu d'un mécanisme de connexion (16) sur un coté pour être connecté aux ceintures (7,8) et, sur un côté de l'axe d'articulation (18) à distance du mécanisme de connexion (16), d'une lèvre (19) qui s'accouple à la came (20), au moyen de laquelle la came (20) peut être déplacée dans la position de libération.

4. Siège enfant pour véhicule (1) selon l'une quelconque des revendications précédentes, **caractérisé en ce que** l'élément d'entrejambe (17) comprend un élément resssort, sous l'influence de la force élastique duquel élément ressort l'élément d'entrejambe (17), quand il est déconnecté des ceintures (7, 8), peut pivoter dans une position éloignée du support dorsal (5), dans laquelle position la came (20) est dans la position de libération.

5. Siège enfant pour véhicule (1) selon l'une quelconque des revendications précédentes, **caractérisé en ce que** la ceinture de tension (12) s'étend à travers le mécanisme de blocage, au-delà d'un côté de la partie de siège (4) à distance du support dorsal (5).

6. Siège enfant pour véhicule (1) selon l'une quelconque des revendications précédentes, **caractérisé en ce que** la came (20) est pourvue de dents (22) s'étendant vers la surface de guidage (13).
